# EUROPÄISCHE PATENTSCHRIFT

(11) **EP 4 141 492 B1**
(45) Veröffentlichungstag und Bekanntmachung des Hinweises auf die Patenterteilung: **29.01.2025**
(21) Anmeldenummer: 21193157.1
(22) Anmeldetag: 26.08.2021
(51) Int. Cl.: G01V 8/12, F16P 3/14, G08B 13/183, G01V 8/20

(54) **LICHTSCHRANKENANORDNUNG UND VERFAHREN ZUM BETRIEB EINER LICHTSCHRANKENANORDNUNG**
LIGHT BARRIER ASSEMBLY AND METHOD FOR OPERATING A LIGHT BARRIER ASSEMBLY
AGENCEMENT DE BARRIÈRE LUMINEUSE ET PROCÉDÉ DE FONCTIONNEMENT D'UN AGENCEMENT DE BARRIÈRE LUMINEUSE

(43) Veröffentlichungstag der Anmeldung: 01.03.2023
(73) Patentinhaber: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(56) Entgegenhaltungen:
- EP-B1- 2 226 656
- EP-B1- 2 444 825
- EP-B1- 3 246 732
- DE-A1- 102012 101 369
- US-A1- 2012 267 516

## Beschreibung

Die Erfindung betrifft eine Lichtschrankenanordnung und ein Verfahren zum Betrieb einer Lichtschrankenanordnung.

Derartige Lichtschrankenanordnungen können insbesondere als Lichtvorhänge ausgebildet sein, die zur Erfassung von Objekten in einem Überwachungsbereich dienen. An einem ersten Rand des Überwachungsbereichs befindet sich ein erstes Gehäuse mit einer Reihenanordnung von Lichtstrahlen emittierenden Sendern. Am gegenüberliegenden Rand des Überwachungsbereichs befindet sich ein zweites Gehäuse mit einer Reihenanordnung von Lichtstrahlen empfangenden Empfängern. Jedem Sender ist ein Empfänger zugeordnet, wodurch ein Sender-Empfänger-Paar gebildet wird.

Bei freiem Überwachungsbereich treffen die Lichtstrahlen der Sender ungehindert auf den Empfänger des jeweiligen Sender-Empfänger-Paars. Bei einem Objekteingriff in den Überwachungsbereich werden die Lichtstrahlen wenigstens eines Sender-Empfänger-Paars unterbrochen. Abhängig davon, ob im Überwachungsbereich ein Objekt vorhanden ist, generiert der Lichtvorhang ein entsprechendes Objektfeststellungssignal.

Die Sender werden durch eine Sendersteuerung gesteuert, die Empfänger von einer Empfängersteuerung. Vorteilhaft erfolgt die Steuerung derart, dass die Sender-Empfänger-Paare einzeln zyklisch nacheinander aktiviert werden.

Die Sender werden nicht direkt von der Sendersteuerung angesteuert. Vielmehr ist jedem Sender ein sendeseitiges Ansteuermittel zugeordnet, die von der Sendersteuerung angesteuert werden. Die sendeseitigen Ansteuermittel können von sendeseitigen integrierten Schaltkreisen gebildet sein.

Entsprechend sind den Empfängern empfangsseitige Ansteuermittel zugeordnet, die von empfangsseitigen integrierten Schaltkreisen gebildet sein können.

Bei bekannten Lichtvorhängen sind die sendeseitigen und empfangsseitigen integrierten Schaltkreise unterschiedlich ausgebildet, das heißt diese müssen als separate integrierte Schaltkreise entwickelt, designed und gefertigt werden. Dies stellt einen hohen Aufwand dar, da integrierte Schaltkreise wie ASIC aufwändige Fertigungsprozesse erfordern.

Die DE 10 2012 101 369 A1 betrifft einen Lichtvorhang zur Erfassung von Objekten innerhalb eines Überwachungsbereichs umfassend eine Anordnung von Lichtstrahlen emittierenden Sendern, eine Anordnung von Lichtstrahlen empfangenden Empfängern und eine Auswerteeinheit, in welcher in Abhängigkeit von Empfangssignalen an den Ausgängen von Empfängern ein Objektfeststellungssignal generiert wird. Die Sender und die Empfänger sind über Ausgangsleitungen einer Anordnung von Rechnereinheiten angesteuert, wobei über diese die Zeitpunkte der Aktivierung einzelner Sender und Empfänger frei wählbar sind.

Die US 2012/0267516 A1 betrifft einen Lichtvorhang zum Überwachen eines Schutzfeldes, wobei der Lichtvorhang umfasst: mindestens eine erste optische Einheit mit einer Vielzahl von lichtemittierenden Elementen und lichtaufnehmenden Elementen und mindestens eine zweite optische Einheit mit einer Vielzahl von lichtemittierenden Elementen und lichtaufnehmenden Elementen, wobei die lichtemittierenden Elemente jeder optischen Einheit in Funktion eine Vielzahl von Lichtschranken mit gegenüberliegenden lichtaufnehmenden Elementen der jeweils anderen optischen Einheit bilden können, eine Steuereinheit zum Verarbeiten von Ausgangssignalen, die von den lichtaufnehmenden Elementen erzeugt werden, und zum Erzeugen eines definierten Ausgangssignals bei Unterbrechung von mindestens einer Lichtschranke, wobei die erste und zweite optische Einheit jeweils eine Sendeempfängereinheit umfassen, welche die Vielzahl von lichtemittierenden Elementen und lichtaufnehmenden Elementen trägt, wobei die erste und zweite Sendeempfängereinheit jeweils eine identische Struktur aufweisen, wobei die erste optische Einheit ein erstes Steuermodul und mindestens ein separat untergebrachtes, abnehmbares erstes Plug-in-Modul aufweist, wobei das erste Plug-in-Modul eine mit dem ersten Steuermodul zu verbindende Zwischenverbindung und Allzweck-Eingangs-/Ausgangsanschlüsse aufweist, wobei das erste Plug-in-Modul dazu konfiguriert ist, die Funktionalität der ersten optischen Einheit als eine Sendeeinheit zu definieren, und wobei die zweite optische Einheit ein zweites Steuermodul und mindestens ein separat untergebrachtes, abnehmbares zweites Plug-in-Modul aufweist, wobei das zweite Plug-in-Modul eine mit dem zweiten Steuermodul zu verbindende Zwischenverbindung und Ausgangssignalschaltvorrichtungsanschlüsse aufweist, wobei das zweite Plug-in- Modul dazu konfiguriert ist, die Funktionalität der zweiten optischen Einheit als eine Empfängereinheit zu definieren.

Die EP 2 226 656 B1 betrifft eine optoelektronische Sensoranordnung mit einer Anzahl von L Lichtsendeelementen zum Aussenden von Lichtsignalen in einen Überwachungsbereich, wobei L ≥ 1 gilt, einer Ansteuereinheit zur Ansteuerung der Lichtsendeelemente über Ansteuer-Signalverbindungen, einer Anzahl von N Lichtempfängern zum Empfang der von den L Lichtsendeelementen ausgesendeten Lichtsignale, wobei N > 1 gilt, mit den Lichtempfängern verbundene Ausgangs-Signalverbindungen zur Ausgabe der Ausgangssignale der Lichtempfänger, und einer Auswerteeinheit zur Erzeugung eines Objektfeststellungssignals in Abhängigkeit der Ausgangssignale der Lichtempfänger. Weiterhin ist wenigstens ein Empfangs-ASIC-Baustein vorhanden, dessen Ausgangsanschlüsse mit wenigstens einem analogen Datenbus verkoppelt sind und in den zumindest Teile der Ausgangs-Signalverbindungen integriert sind und der p Eingangsanschlüsse zum Anschluss von Lichtempfängern und q Ausgangsanschlüsse umfasst, wobei "p > 1 und q > 1" oder "p = 1 und q > 1" oder "p > 1 und q = 1" gilt. Der wenigstens eine Empfangs-ASIC-Baustein verfügt über eine Schalteinheit, mit der jeder der p Eingangsanschlüsse mit wenigstens einem der q Ausgangsanschlüsse verbunden werden kann, und wobei die Summe der Produkte der Anzahl der Empfangs-ASIC-Bausteine mit der jeweiligen Anzahl p der Eingangsanschlüsse größer oder gleich N ist. Die p Eingangsanschlüsse des wenigstens einen Empfangs-ASIC-Bausteins verfügen über auf dem wenigstens einen Empfangs-ASIC-Baustein integrierte Verstärker, die vor der Schalteinheit angeordnet sind.

Die EP 2 444 825 B1 betrifft einen Lichtvorhang zur Detektion von Objekten in einem Überwachungsbereich mit einer Anordnung von Strahlachsen bildenden Sendern und Empfängern, wobei die Sender und Empfänger der Strahlachsen einzeln oder zu mehreren nacheinander aktivierbar sind. Die Lichtstrahlen des Senders einer Strahlachse sind bei freiem Überwachungsbereich auf den Empfänger dieser Strahlachse geführt. In einer Auswerteeinheit wird in Abhängigkeit der Empfangssignale an den Ausgängen der Empfänger ein Objektfeststellungssignal generiert. Die Sender bilden wenigstens eine Senderkaskade, wobei die Sender mittels einer ersten Ansteuerschaltung ohne strombegrenzenden Widerstand in deren Strompfad direkt einzeln oder zu mehreren aktivierbar sind und dabei der Sendestrom zentral vorgegeben wird und für die einzelnen Sender individuell anpassbar ist. Zusätzlich oder alternativ bilden die Empfänger wenigstens eine Empfängerkaskade, wobei die Empfänger mittels einer zweiten Ansteuerschaltung einzeln oder zu mehreren aktivierbar sind. Die Empfangssignale werden ohne einzelne aktive Vorverstärkung, Analogschalter und/oder Impedanzwandler pro Empfänger einem gemeinsamen Gruppenverstärker zugeführt, wobei jeder Empfänger von einer Empfangsdiode oder einem Empfangstransistor gebildet ist. Die Empfangssignale der Empfangsdiode oder des Empfangstransistors sind über eine Entkoppeldiode oder einen kapazitätsarmen Transistor auf eine Signalleitung, die eine Sammelleitung bildet, geführt sind.

Die EP 3 246 732 B1 betrifft ein Verfahren zum Betrieb eines Lichtvorhangs, wobei mit dem Lichtvorhang eine Erfassung von Objekten in einem Überwachungsbereich erfolgt und der Lichtvorhang eine eine Anzahl von Lichtstrahlen emittierenden Sendern aufweisende Sendeeinheit an einem ersten Rand des Überwachungsbereichs, und eine Empfangseinheit an einem zweiten Rand des Überwachungsbereichs aufweist. Die Empfangseinheit weist eine Anzahl von Lichtstrahlen empfangenden Empfängern und eine Auswerteeinheit, in welcher in Abhängigkeit von Empfangssignalen der Empfänger ein Objektfeststellungssignal generiert wird, auf. Zur Steuerung der Sender ist in der Sendeeinheit eine Steuereinheit vorgesehen. Jedem Sender ist ein digitales Schaltwerk zugeordnet, wobei den digitalen Schaltwerken nacheinander in der Steuereinheit generierte Steuersignale zugeführt sind, mittels derer die den digitalen Schaltwerken zugeordneten Sender aktiviert oder deaktiviert sind. Jedes digitale Schaltwerk generiert ein binäres Statussignal, dessen Signalzustände angeben, ob der Sender mit den Steuersignalen aktiviert wurde oder nicht, wobei die binären Statussignale aller digitalen Schaltwerke zeitlich nacheinander in die Steuereinheit rückgelesen und dort mit Sollwerten verglichen werden.

Die Erfindung liegt die Aufgabe eine Lichtschrankenanordnung bereitzustellen, welche rationell gefertigt werden kann und zudem eine hohe Funktionalität und hohe Funktionssicherheit aufweist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Dadurch, dass bei der erfindungsgemäßen Lichtschrankenanordnung dieselben integrierte Schaltkreise als Ansteuermittel sowohl für die Ansteuerung der Sender als auch der Empfänger verwendet werden können, wird ein erheblicher Rationalisierungseffekt bei der Fertigung der Lichtschrankenanordnung erzielt, da nur noch eine Variante von integrierten Schaltkreisen entwickelt und gefertigt werden muss. Da die integrierten Schaltkreise sowohl als sendeseitige als auch als empfangsseitige Ansteuermittel genutzt werden können, erhöht sich die Stückzahl der vorzugsweise als ASICs ausgebildeten integrierten Schaltkreise. Zudem wird die Lagerhaltung vereinfacht, da nur noch eine Variante von integrierten Schaltkreisen vorgehalten werden muss.

Generell wird die Lichtschrankenanordnung zur Überwachung eines Schutzfeldes eingesetzt, das von den Lichtstrahlen der Lichtschrankenanordnung gebildet wird.

Die Funktionsweise der Lichtschrankenanordnung ist dabei derart, dass abhängig davon ob innerhalb des Schutzfelds ein Objekt registriert wird oder nicht ein Objektfeststellungssignal generiert wird.

Dabei bildet jeder Sender mit einem zugeordneten Empfänger ein Sender-Empfänger-Paar. Bei freiem Schutzfeld treffen die Sender aller Sender-Empfänger-Paare ungehindert auf den zugeordneten Empfänger. Bei einem Objekteingriff im Schutzfeld wird der Strahlengang der Lichtstrahlen wenigstens eines Senders unterbrochen. Die entsprechenden Empfangssignale werden in einer Auswerteeinheit zur Generierung des Objektfeststellungssignals ausgewertet.

Vorteilhaft ist die Lichtschrankenanordnung als Sicherheitssensor ausgebildet und kann somit im Bereich der Sicherheitstechnik eingesetzt werden. Hierzu weist die Auswerteeinheit einen fehlersicheren, vorzugsweise zweikanaligen Aufbau auf.

Der Sicherheitssensor wird insbesondere zur Gefahrenbereichsüberwachung an Anlagen, von denen Gefahren für Personen ausgehen, eingesetzt. Wird mit dem Sicherheitssensor ein Objekt im Schutzfeld erkannt, wird eine Sicherheitsfunktion ausgelöst, insbesondere die Anlage stillgesetzt.

Im einfachsten Fall ist die Lichtschrankenanordnung als Einweg-Lichtschranke mit nur einem Sender und nur einem Empfänger ausgebildet.

Besonders vorteilhaft weist die Lichtschrankenanordnung mehrere Sender und mehrere Empfänger auf, wobei jedem Sender ein Empfänger zugeordnet ist und mit diesem ein Sender-Empfänger-Paar bildet.

Gemäß einer ersten Variante sind alle Sender in einem ersten Gehäuse und alle Empfänger in einem zweiten Gehäuse angeordnet.

Dieser Aufbau entspricht einem herkömmlichen Lichtvorhang. Die Auswerteeinheit ist dann in dem Gehäuse mit den Empfängern integriert.

Gemäß einer zweiten Variante sind zwei Gehäuse vorgesehen, wobei in jedem Gehäuse eine alternierende Anordnung von Sendern und Empfängern vorgesehen ist.

Auch diese Lichtschrankenanordnung bildet einen Lichtvorhang.

In diesem Fall ist es zweckmäßig, wenn Ergebnisse einer Schutzfeldauswertung über die Lichtstrahlen eines ausgewählten Senders zum zugeordneten Empfänger übertragen werden.

Damit liegen alle Ergebnisse der Schutzfeldauswertung im selben Gehäuse der Lichtschrankenanordnung vor und können von einer dort integrierten Auswerteeinheit zur Generierung des Objektfeststellungssignals ausgewertet werden.

Erfindungsgemäß weist jeder integrierte Schaltkreis einen Verstärker von Empfangssignalen eines Empfängers und einen Treiber zur Ansteuerung eines Senders auf.

Damit sind in jedem integrierten Schaltkreis Senderfunktionen und Empfängerfunktionen integriert, wobei je nachdem, ob ein integrierter Schaltkreis als Ansteuermittel für einen Sender oder Empfänger verwendet wird durch eine externe Busschaltung und/oder Programmierung die jeweilige Sender- oder Empfängerfunktion aktiviert wird.

Zweckmäßig sind die Sender von Leuchtdioden und die Empfänger von Fotodioden gebildet.

Besonders vorteilhaft sind den Sendern und Empfängern gleichartige Optiken zugeordnet.

Dadurch ergibt sich ein weiterer Rationalisierungseffekt bei der Herstellung der Lichtschrankenanordnung.

Die Funktionalität der integrierten Schaltkreise ist vorteilhaft dadurch weiter erhöht, dass jeder integrierte Schaltkreis eine Speicherlogik für ein Anzeigeelement aufweist.

Mit den Anzeigemitteln können Statusanzeigen der Lichtschrankenanordnung verwirklicht werden. Auch können diese als Hilfsmittel zur Justage der Lichtschrankenanordnung verwendet werden.

Vorteilhaft sind Funktionalitäten der integrierten Schaltkreise mittels einer Steuerung vorgebbar.

Dabei ist in jedem Gehäuse der Lichtschrankenanordnung eine Steuerung integriert, die die in diesem Gehäuse vorhandenen integrierten Schaltkreise ansteuert.

Insbesondere kann dadurch eine Adressierung der einzelnen integrierten Schaltkreise und damit der einzelnen Sender und Empfänger erfolgen, wodurch diese einzeln angesprochen werden. Damit ist insbesondere eine zyklische Aktivierung einzelner Sender-Empfänger-Paare der Lichtschrankenanordnung möglich.

Zur Durchführung der Adressierung weist vorteilhaft jeder integrierte Schaltkreis eine Adressierschaltung auf.

Dabei weist die Adressierschaltung insbesondere eine Anordnung von Schieberegistern oder Flipflops auf.

Vorteilhaft erfolgt die Adressierung mittels eines Tokens, das in der Steuerung generiert wird und dann von einem integrierten Schaltkreis zum nächsten weitergegeben wird. Das Token ist ein Adressierungssignal im einfachsten Fall ein Adressierungsbit.

Für den Fall, dass die Adressierschaltung der integrierten Schaltkreise jeweils in Form eines Schieberegisters ausgebildet ist, ergänzen sich die Schieberegister der an die Steuerung angeschlossenen integrierten Schaltkreise zu einem gemeinsamen, großen Schieberegister. Durch das Token erfolgt ein Weiterschalten der Schieberegister, so dass die integrierten Schaltkreise nacheinander aktiviert werden.

Für den Fall, dass die Adressierschaltung der integrierten Schaltkreise jeweils von Flipflops gebildet sind, kann die Adressierung in entsprechender Weise erfolgen.

Insbesondere in diesem Fall ist es möglich, dass mit einem Token unterschiedliche Adressierphasen innerhalb eines integrierten Schaltkreises aktivierbar sind.

Das Token kann dann durch die Flipflops innerhalb eines integrierten Schaltkreises mehrfach weitergeschoben werden, wodurch unterschiedliche Adressierphasen ausgelöst werden können, wobei diese unterschiedlich lang ausgebildet sein können. Die einzelnen Adressierphasen können zu Mess- oder Testzwecken genutzt werden, aber auch zur Ansteuerung von im integrierten Schaltkreis integrierten Anzeigeelementen.

Vorteilhaft sind Bussignale von der Steuerung in einen integrierten Schaltkreis eingebbar.

Damit wird ein Steuerbus bereitgestellt, dessen Bussignale zur Steuerung von Funktionen der integrierten Schaltkreise genutzt werden können.

Insbesondere kann der Steuerbus ein Clocksignal generieren, das für ein Weiterschieben des Tokens von einem integrierten Schaltkreis zum nächsten sorgt.

Auch kann der Steuerbus Bussignale zur Adressiersteuerung generieren.

Gemäß einer besonders vorteilhaften Ausgestaltung der Erfindung sind in jedem integrierten Schaltkreis Testmittel zur Durchführung von Selbsttests vorgesehen.

Insbesondere sind in jedem integrierten Schaltkreis die Verstärker zur Verstärkung von Empfangssignalen und die Verstärker zur Ansteuerung von Sendern testbar.

Weiterhin kann in jedem integrierten Schaltkreis die Adressierschaltung getestet werden.

Dabei können Testsignale und/oder Testphasen in einem integrierten Schaltkreis selbst generiert werden oder über Busleitungen eingelesen werden. Insbesondere können Testsignale und/oder Testphasen aus einem Token und/oder aus über Busleitungen eingelesenen Clocksignalen abgeleitet werden.

Die Testergebnisse können über Busleitungen des Steuerbusses ausgegeben und damit in der Steuerung zentral ausgewertet werden. Durch die Adressierung der integrierten Schaltkreise ist in der Steuerung bekannt, von welchem integrierten Schaltkreis die jeweiligen Testergebnisse stammen.

Besonders vorteilhaft weisen die Testmittel Zeitsteuermittel zur Durchführung von Selbsttests auf.

In den integrierten Schaltkreisen können Anordnungen von Monoflops oder allgemein Zeitsteuerungen vorhanden sein, mit denen der Start, der Ablauf und das Ende von Testphasen vorgegeben werden kann. Insbesondere können mit den Monoflops Zeitdelays vorgegeben werden, um Testzeitpunkte oder Testdauern festzulegen.

Weiter vorteilhaft weisen die Testmittel Speichermittel zur Speicherung von Soll-Testergebnissen auf, wobei bei Durchführung von Tests erhaltene Testergebnisse mit den Soll-Testergebnissen verglichen werden.

Die Speichermittel können analoge Speicher wie Kondensatoren oder digitale Speicher sein. Soll-Testergebnisse können Amplituden, Pulsweiten oder sonstige Kenngrößen von Signalen sein.

Die Erfindung wird im Folgenden anhand der Zeichnungen erläutert. Es zeigen:
- Figur 1a:: Erstes Ausführungsbeispiel der erfindungsgemäßen Lichtschrankenanordnung.
- Figur 1b:: Zweites Ausführungsbeispiel der erfindungsgemäßen Lichtschrankenanordnung.
- Figur 2:: Ausführungsbeispiel eines ASIC mit externer Beschaltung für die Lichtschrankenanordnung gemäß den Figuren 1a und 1b.
- Figur 3:: Variante der Ausführungsform gemäß Figur 2.
- Figur 4:: ASIC-Anordnung für die Sendereinheit der Lichtschrankenanordnung gemäß Figur 1a.
- Figur 5:: ASIC-Anordnung für die Empfängereinheit der Lichtschrankenanordnung gemäß Figur 1a.
- Figur 6:: ASIC-Anordnung für die Lichtschrankenanordnung gemäß Figur 1b.
- Figur 7a - e:: Impulsdiagramme für eine Adressierung einer ASIC-Anordnung.
- Figur 8a - h:: Variante der Ausführungsform gemäß Figur 7.
- Figur 9:: Variante der Ausführungsform gemäß Figur 2.

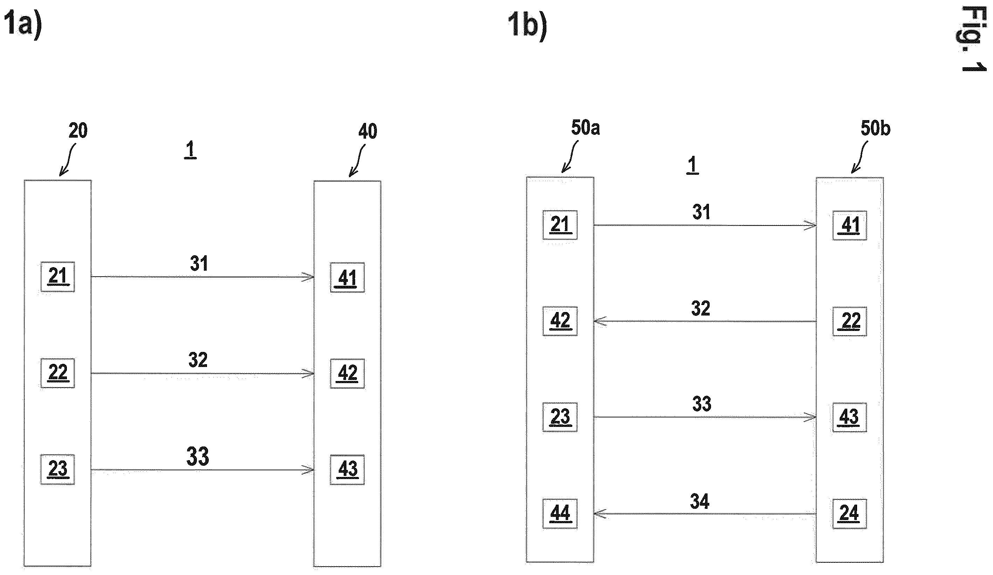

Die Figuren 1a und 1b zeigen schematisch zwei Ausführungsformen der erfindungsgemäßen Lichtschrankenanordnung 1. Die Lichtschrankenanordnungen 1 bilden in den vorliegenden Fällen Lichtvorhänge.

Bei der Ausführungsform gemäß Figur 1a ist eine Sendereinheit 20 mit einem ersten Gehäuse an einem ersten Rand eines Überwachungsbereichs und eine Empfängereinheit 40 mit einem zweiten Gehäuse am gegenüberliegenden Rand des Überwachungsbereichs. In der Sendereinheit 20 ist eine Reihenanordnung von Sendern 21, 22, 23 vorgesehen die Lichtstrahlen 31, 32, 33 emittieren. In der Empfängereinheit 40 ist eine Reihenanordnung von Lichtstrahlen 31 - 33 empfangenden Empfängern 41, 42, 43 vorgesehen.

Die Anordnung gemäß Figur 1b unterscheidet sich von der Ausführungsform gemäß Figur 1a dadurch, dass zwei Sender-Empfänger-Einheiten 50a, 50b vorgesehen sind, die an gegenüberliegenden Rändern des Überwachungsbereichs angeordnet sind. In den Sender-Empfänger-Einheiten 50a, 50b befindet sich jeweils eine alternierende Anordnung von Lichtstrahlen 31 - 34 emittierenden Sendern 21 - 24 und zugeordneten Empfängern 41 - 44.

Die Sender 21 - 24 jeder Lichtschrankenanordnung 1 sind von Leuchtdioden gebildet, die Empfänger 41 - 44 jeder Lichtschrankenanordnung 1 sind von Fotodioden gebildet. Den Sendern 21 - 24 und Empfängern 41 - 44 sind gleichartige Optiken zugeordnet.

Bei beiden Lichtschrankenanordnungen 1 bildet jeweils ein Sender 21 - 24 und ein zugeordneter Empfänger 41 - 44 ein Sender-Empfänger-Paar, deren Lichtstrahlen 31 - 34 eine Strahlachse ausbilden. Die Lichtschrankenanordnung 1 gemäß Figur 1a weist drei Strahlachsen auf, die Lichtschrankenanordnung 1 gemäß Figur 1b weist vier Strahlachsen auf. Natürlich kann bei beiden Ausführungsformen eine andere Anzahl von Strahlachsen vorgesehen sein.

In der Sendereinheit 20, der Empfängereinheit 40 und in den Sender-Empfänger-Einheiten 50a, 50b ist jeweils eine Steuerung integriert, mit der die Aktivierung der Sender-Empfänger-Paare gesteuert wird. Vorzugsweise werden die Sender-Empfänger-Paare zyklisch einzeln nacheinander aktiviert.

Die Strahlachsen der jeweiligen Lichtschrankenanordnung 1 bilden jeweils ein flächiges Schutzfeld innerhalb dessen eine Objekterfassung erfolgt. Bei freiem Schutzfeld treffen die Lichtstrahlen 31 - 34 des Senders 21 - 24 jeder Strahlachse ungehindert auf den zugeordneten Empfänger 41 - 44. Bei einem Objekteingriff werden die Lichtstrahlen 31 - 34 wenigstens einer Strahlachse unterbrochen.

In einer nicht dargestellten Auswerteeinheit wird abhängig von den Empfangssignalen der Empfänger 41 - 44 ein binäres Objektfeststellungssignal generiert, dessen Schaltzustände angeben, ob sich ein Objekt im Schutzfeld befindet oder nicht.

Bei der Lichtschrankenanordnung 1 gemäß Figur 1a ist die Auswerteeinheit in der Empfängereinheit 40 integriert.

Bei der Lichtschrankenanordnung 1 gemäß Figur 1b ist die Auswerteeinheit beispielsweise in der Sender-Empfänger-Einheit 50b integriert. Dann werden die Ergebnisse einer Schutzfeldauswertung, die für die Empfänger 42, 44 in der ersten Sender-Empfänger-Einheit 50a vorliegen, über die Lichtstrahlen 31 oder 33 eines Senders 21 oder 23 an die Sender-Empfänger-Einheit 50b übertragen, so dass sie dort in der Auswerteeinheit ausgewertet werden können.

Die Lichtschrankenanordnungen 1 können vorteilhaft als Sicherheitssensoren ausgebildet sein. In diesem Fall weisen die Auswerteeinheiten einen fehlersicheren, redundanten Aufbau auf.

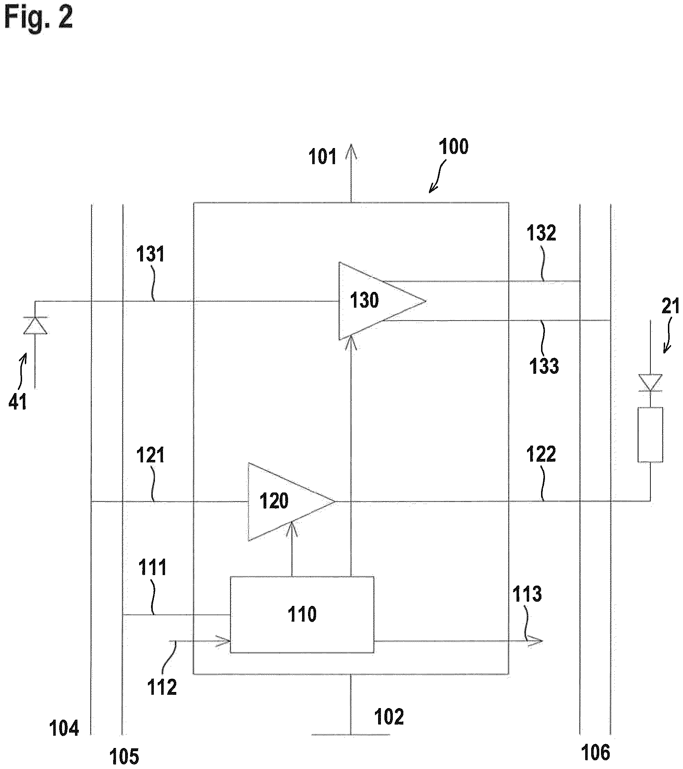

Erfindungsgemäß ist jedem Sender 21 - 24 oder Empfänger 41 - 44 der Lichtschrankenanordnung 1 als Ansteuermittel derselbe integrierte Schaltkreis zugeordnet, der im vorliegenden Fall als ASIC 100 ausgebildet wird. Ein Beispiel hierfür zeigt Figur 2.

Ja nachdem ob der ASIC 100 als Ansteuermittel für einen Sender 21 - 24 oder Empfänger 41 - 44 eingesetzt wird, wird dessen Funktion hierfür auch eine externe Beschaltung und/oder Programmierung vorgegeben.

Wie Figur 2 zeigt, weist der ASIC 100 eine Versorgungsleitung 101 zum Anschluss an eine Betriebsspannung *U_{b}* und eine Versorgungsleitung 102 zum Anschluss an Masse (Ground) auf.

Der ASIC 100 weist eine Adressierschaltung 110 in Form einer Adressierungslogik auf, die von einem Schieberegister oder einem oder mehreren Flipflops mit Auswertelogik gebildet sein kann.

Über die Adressierschaltung 110 kann die Verstärkung eines Verstärkers 130 für einen Empfänger 41 - 44 gesteuert werden. Zudem kann über die Adressierschaltung 110 ein Treiber 120 für einen Sender 21 -24 gesteuert werden.

Über Ausgangssignale 132, 133 wird die Verstärkung für den einen Empfänger 41 über das Ausgangssignal 132, 133 der Busleitung 106 zugeführt und das Ansteuersignal von der Busleitung 104 über den Treiber 120 dem Treibersignal 122 dem jeweiligen Sender 21 zugeführt.

Von der nicht dargestellten Steuerung führen Busleitungen 104, 105, 106 eines Steuerbusses zum ASIC 100.

Über die Busleitung 104 werden je nach Einsatz der ASIC 100 für einen Sender 21 oder Empfänger 41 Bussignale 121 zur Ansteuerung des Treibers 120 für einen Sender 21 oder Signale 131 zur Verbindung des Empfängers 41 mit Verstärker 130 und Ausgabe der verstärkten Signale auf die Busleitungen 106 in dem ASIC 100 generiert.

Somit kann über die Steuerung die Funktionalität der ASIC 100 genutzt werden, je nachdem ob der ASIC 100 als Ansteuerung für den Sender 21 oder als Empfängerverstärker für Empfänger 41 funktioniert.

Die Busleitung 105 mit Eingang 112 und Ausgang 113 dient als Adressiersteuerung zur Adressierung des ASIC 100. Vorteilhaft ist ein Clocksignal auf der Busleitung 105, das mit jeder Flanke oder weiteren Flanken das nachfolgende ASIC 100 adressiert, indem eine Token (Adressierungsbit) über Ausgang 113 an den Eingang 112 des nachfolgenden ASIC 100 übergeben wird.

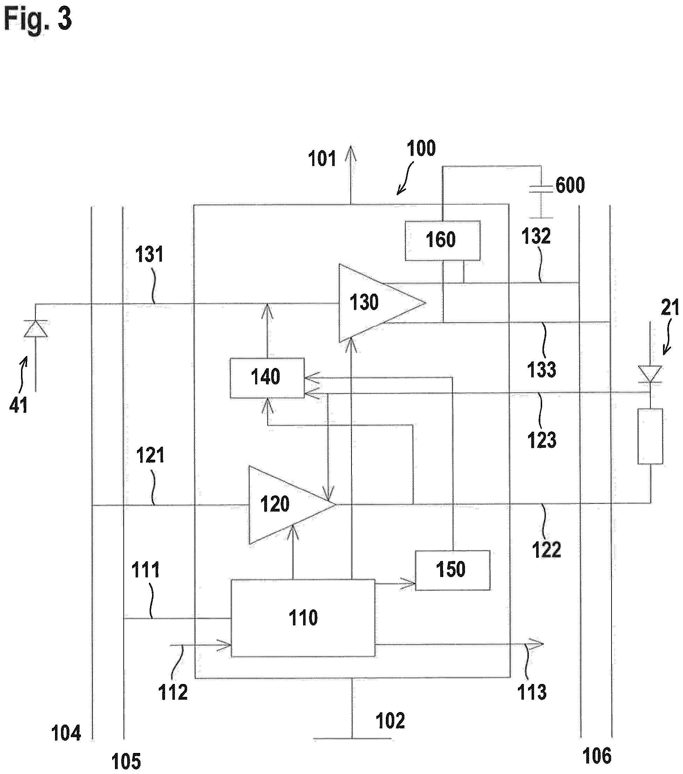

Vorteilhaft weist jedes ASIC 100 Testmittel zur Durchführung von Selbsttests auf. Die entsprechende Erweiterung gegenüber der Ausführungsform gemäß Figur 2 zeigt Figur 3.

Der Aufbau des ASIC 100 gemäß Figur 3 entspricht im Wesentlichen der Ausführungsform gemäß Figur 2. Zusätzlich sind als Testmittel ein Testsignalgenerator 150 und ein Testsignalkoppler 140 vorgesehen. Weiterhin ist eine Speichersteuerung 160 vorgesehen, an die ein externes Speicherelement 600 in Form eines Kondensators angeschlossen ist.

Bei der Ausführungsform gemäß Figur 3 werden insbesondere folgende Tests durchgeführt.

Um dem Verstärker 130 ein Testsignal aufzuprägen, kann das Treibersignal (Ausgang oder Eingang) für einen in diesem Fall nicht vorhandenen Sender 21 an den Verstärkereingang des Verstärkers 130 gekoppelt werden, um damit den Verstärker 130 zu testen (zum Beispiel den Grad der Verstärkung).

Des Weiteren kann das Stromsignal des Senders 21 über den Testsignalkoppler 140 auf den Verstärker 130 gekoppelt und verstärkt auf die Busleitungen 106 des Steuerbusses ausgegeben werden, damit die Steuerung das Testergebnis überprüfen kann.

Des Weiteren kann das Testsignal statt aus dem Treibersignal intern generiert werden, nämlich im Testsignalkoppler 140.

Des Weiteren kann das Testergebnis zum Beispiel eines externen Testsignals des Steuerbusses oder intern generierten Testsignals des Testsignalgenerators 150 in einem Speicherelement 600 zwischengespeichert werden und zeitverzögert auf den Steuerbus für die Signale ausgegeben werden. Natürlich könnte die Speicherung auch digital erfolgen und danach zum Beispiel seriell über den Steuerbus (Busleitung 106) an den Controller 200 signalisiert werden.

Auch ist eine Digitalisierung in der Speichersteuerung 160 mittels eines Analog-Digital-Wandlers möglich, wobei dann die Testsignale über einen Digital-Analog-Wandler auf den Steuerbus gegeben werden. In diesem Falle ist statt des Speicherelements 600 ein digitaler Speicher in der Speichersteuerung 160 erforderlich.

Bei intern generiertem Testsignal kann auf das externe Testsignal über den Steuerbus verzichtet werden. Die Speichersteuerung 160 kann auch durch die Adressierschaltung 110 gesteuert werden.

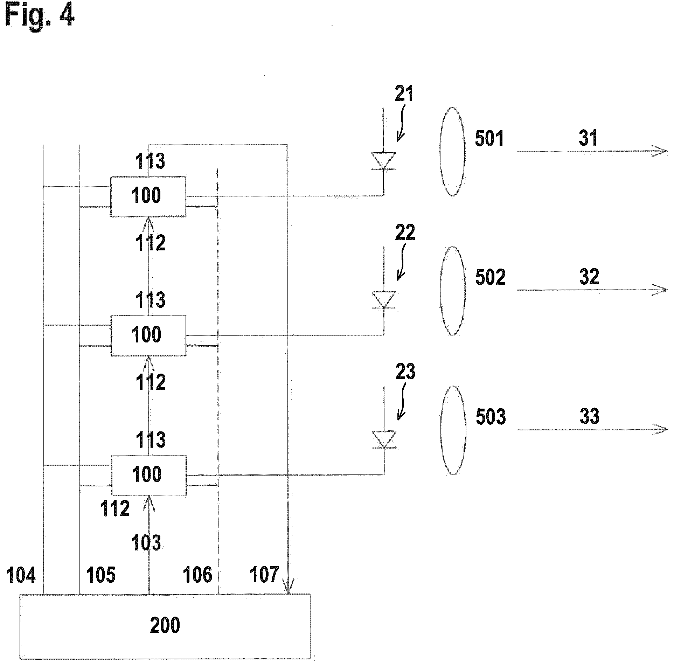

Figur 4 zeigt eine ASIC-Anordnung für die Sendereinheit 20 der Lichtschrankenanordnung 1 gemäß Figur 1a. Den Sendern 21, 22, 23 sind gleichartige Optiken in Form von Linsen 501, 502, 503 zugeordnet.

Die Steuerung ist von einem Controller 200 gebildet, an welchen die Busleitungen 104, 105, 106 angeschlossen sind, welche auf die ASICs 100 geführt sind. Da die ASICs 100 Ansteuermittel für die Sender 21, 22, 23 bilden, werden über Verdrahtung, Konfiguration oder Steuerung nur die Treiber 120, nicht jedoch die Verstärker 130 aktiviert.

Über die Leitung 103 wird von der Steuerung dem ersten ASIC 100 ein Token zugeführt, das dann an die weiteren ASICs 100 weitergegeben wird. Das Token dient zur Adressierung der ASICs 100. Die Rückführleitung 107 dient zur Rückführung des Tokens vom Ende der durch die ASICS 100 gebildete Schiebekette zur Steuerung, damit diese den korrekten Durchlauf des Tokens überprüfen kann.

Die ASICs 100 sind gemäß den Figuren 2 beziehungsweise 3 ausgebildet.

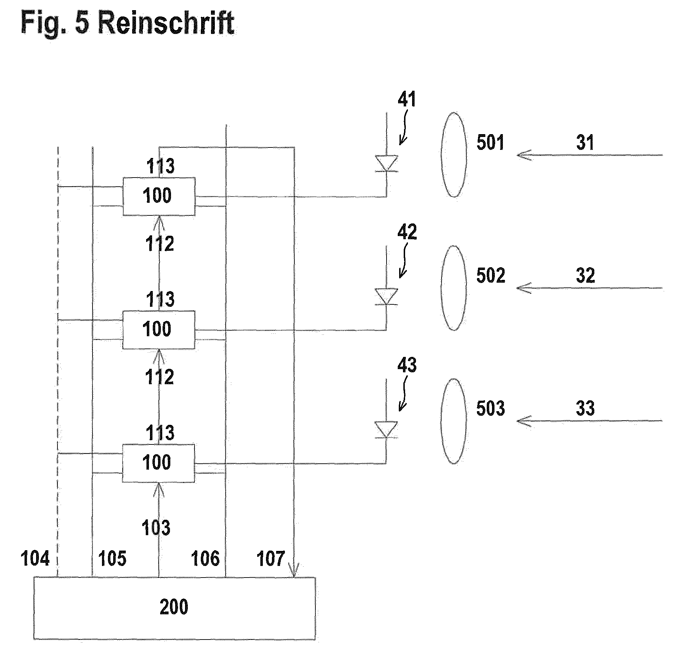

Figur 5 zeigt eine ASIC-Anordnung für die Empfängereinheit 40 der Lichtschrankenanordnung 1 gemäß Figur 1b.

In diesem Fall bilden die ASICs 100 Ansteuermittel für die Empfänger 41, 42, 43, so dass in den ASICs 100 nur die Verstärker 130 aktiviert werden.

Ansonsten entspricht die Anordnung gemäß Figur 5 hinsichtlich Aufbau und Funktionsweise der Anordnung gemäß Figur 4.

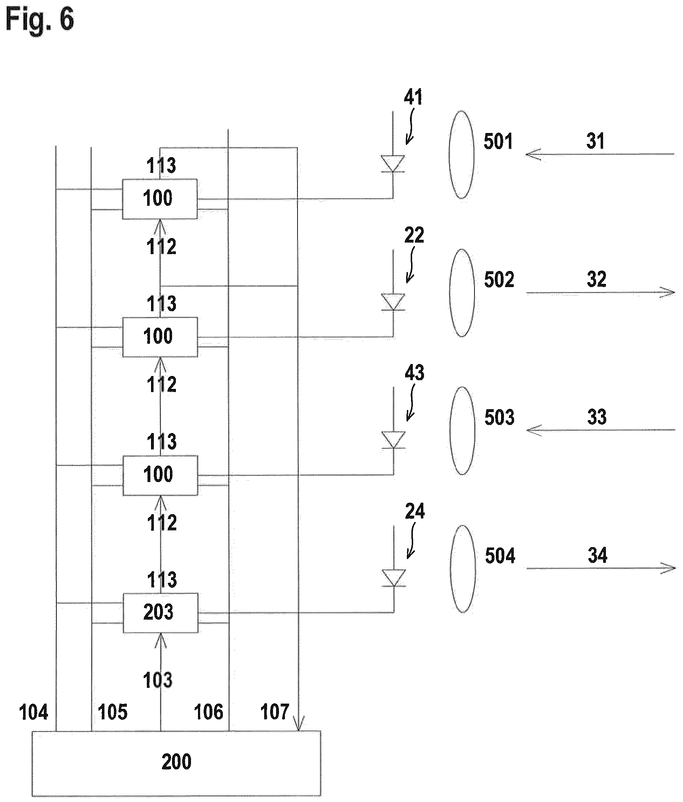

Figur 6 zeigt eine ASIC-Anordnung für die Sender-Empfänger-Einheit 50a. In diesem Fall bilden zwei ASICs 100 Ansteuermittel für zwei Sender 21, 23, denen Linsen 501, 503 zugeordnet sind. Zwei weitere ASICs 100 bilden Ansteuermittel für die Empfänger 42, 44, denen Linsen 502, 504 zugeordnet sind.

Ansonsten entspricht die Anordnung gemäß Figur 6 hinsichtlich Aufbau und Funktionsweise den Anordnungen gemäß den Figuren 4 und 5.

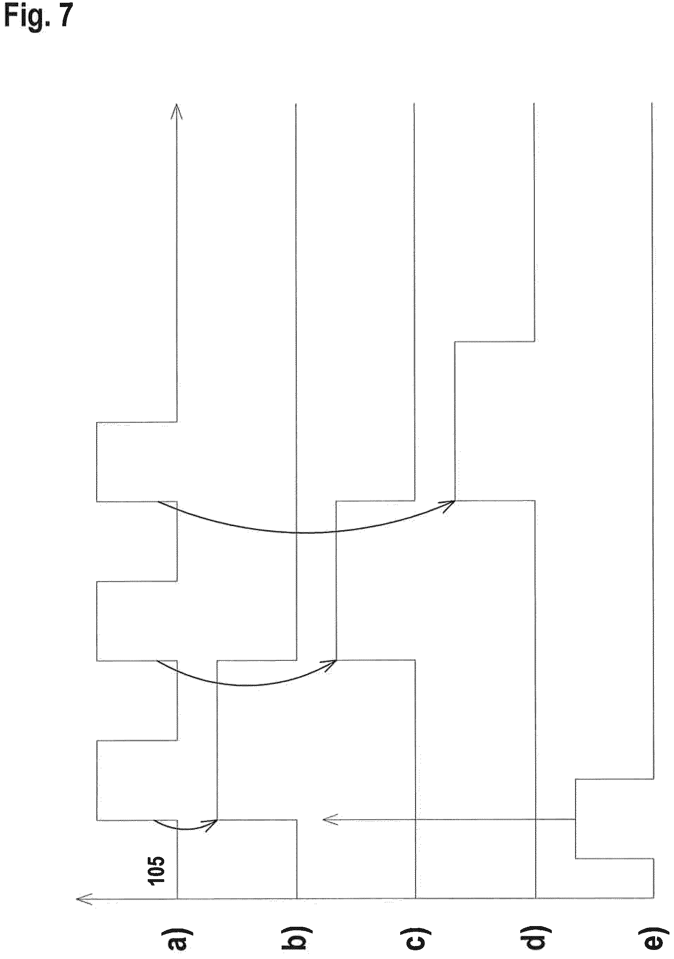

Figur 7 zeigt ein Beispiel einer Adressierung der ASIC-Anordnung gemäß den Figuren 4 beziehungsweise 5.

Figur 7a zeigt den zeitlichen Verlauf eines periodischen Clocksignals, das über den Steuerbus von der Steuerung an die ASICs 100 ausgegeben wird. Das Clocksignal besteht aus einer Folge von Einzelpulsen.

Figur 7e zeigt den Token zu einem Zeitpunkt an dem dieser an den ersten ASIC 100 ausgegeben ist, so dass dieser entsprechend adressiert wird. Das Adressierungssignal zeigt Figur 7b. Durch Weitergabe des Token an die beiden weiteren ASICs 100 werden auch diese adressiert. Die entsprechenden Adressierungssignale zeigen die Figuren 7c und 7d.

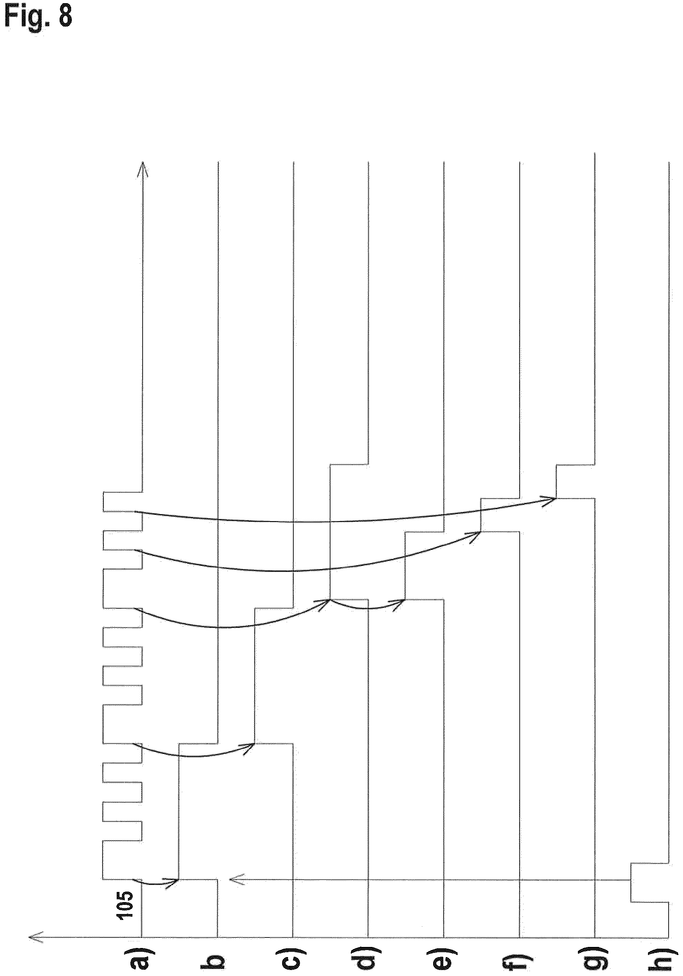

Figur 8 zeigt eine Erweiterung der Ausführungsform gemäß Figur 7.

In diesem Fall besteht das Clocksignal aus einer periodischen Folge von Mehrfachpulsen, im gezeigten Beispiel bestehend jeweils aus einem längeren Puls gefolgt von drei kürzeren Pulsen.

Auch in diesem Fall erfolgt die Adressierung der ASICs 100 über das Token, das von einem ASIC 100 zum nächsten weitergeschoben wird, so dass sich wieder die Adressierungssignale gemäß den Figuren 8b, 8c, 8d (entsprechend den Adressierungssignalen der Figuren 7b, 7c, 7d ergeben).

Durch die kürzeren Pulse des Clocksignals wird das Token schrittweise innerhalb des jeweiligen ASICs 100 weitergeschoben, wodurch unterschiedliche Adressierphasen initiiert wurden. Dies ist in den Figuren 8e, 8f, 8g nur für den letzten ASIC 100 dargestellt, wobei entsprechende Adressierphasen auch für die beiden anderen ASICs 100 initiiert werden. Erst wenn alle internen Adressierungsphasen durchlaufen sind, wird das Token an das nachfolgende ASIC 100 weitergegeben.

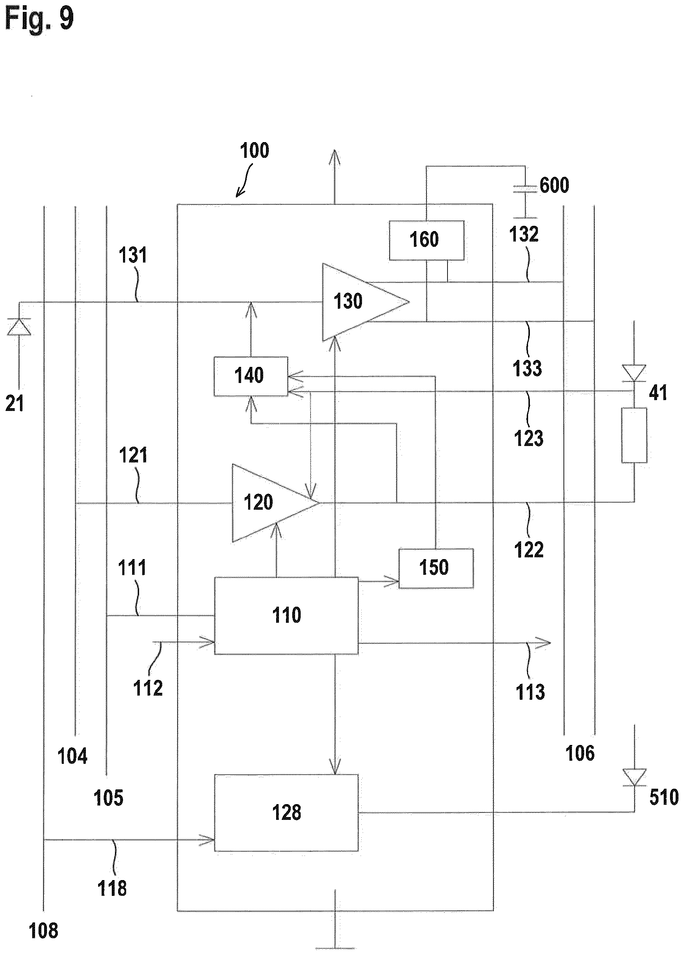

Figur 9 zeigt eine Variante des ASICs 100 gemäß Figur 3. Die Anordnung gemäß Figur 9 ist gegenüber der Anordnung gemäß Figur 3 dahingehend erweitert, dass eine Speicherlogik 128 zur Ansteuerung eines Anzeigeelements 510 vorgesehen ist. Das Anzeigeelement 510 ist im vorliegenden Fall in Form einer Leuchtdiode ausgebildet, die sichtbares Licht abstrahlt.

Der Steuerbus weist eine zusätzliche Busleitung 108 auf, über welche ein Steuersignal 118 zur Ansteuerung des Anzeigeelements 510 der Speicherlogik 128 zugeführt wird. Zur Adressierung der Speicherlogik können die Adressierung des ASIC 100 oder interne Adressierungsphasen in Kombination mit dem Steuersignal 118 verwendet werden.

### Bezugszeichenliste

- (1): Lichtschrankenanordnung
- (20): Sendereinheit
- (21-24): Sender
- (31 - 34): Lichtstrahlen
- (40): Empfängereinheit
- (41 - 44): Empfänger
- (50a, 50b): Sender-Empfänger-Einheit
- (100): ASIC
- (101, 102): Versorgungsleitung
- (103): Leitung
- (104 - 106): Busleitung
- (107): Rückführleitung
- (108): Busleitung
- (110): Adressierschaltung
- (112): Eingangssignal
- (113): Ausgangssignal
- (118): Steuersignal
- (120): Treiber
- (121): Bussignal
- (122): Treibersignal
- (128): Speicherlogik
- (130): Verstärker
- (131): Signal
- (132, 133): Ausgangssignal
- (140): Testsignalkoppler
- (150): Testsignalgenerator
- (160): Speichersteuerung
- (200): Controller
- (501 - 504): Linse
- (510): Anzeigeelement
- (600): Speicherelement

## Patentansprüche

1. Lichtschrankenanordnung (1) mit einer Anordnung von Lichtstrahlen (31 - 34) emittierenden Sendern (21 - 24) und Lichtstrahlen (31 - 34) empfangenden Empfängern (41 - 44), wobei mit der ein Schutzfeld überwacht wird, wobei abhängig davon ob innerhalb des Schutzfelds ein Objekt registriert wird oder nicht ein Objektfeststellungssignal generiert wird, wobei jedem Sender (21 - 24) und jedem Empfänger (41 - 44) als Ansteuermittel ein integrierter Schaltkreis zugeordnet ist, wobei die integrierte Schaltkreise identisch ausgebildet sind und sowohl Senderfunktionen als auch Empfängerfunktionen enthalten, wobei jeder integrierte Schaltkreis einen Verstärker (130) zur Verstärkung von Empfangssignalen eines Empfängers (41 - 44) aufweist und wobei durch eine externe Beschaltung und/oder Programmierung ein integrierter Schaltkreis wahlweise als Ansteuermittel für einen Sender (21 - 24) oder einen Empfänger (41 - 44) einsetzbar ist, **dadurch gekennzeichnet, dass** jeder integrierte Schaltkreis weiterhin einen Treiber (120) zur Ansteuerung eines Senders (21 - 24) aufweist.

2. Lichtschrankenanordnung (1) nach Anspruch 1, **dadurch gekennzeichnet, dass** diese ein Sicherheitssensor ist, wobei abhängig von dem Objektfeststellungssignal eine Sicherheitsfunktion ausgelöst wird.

3. Lichtschrankenanordnung (1) nach einem der Ansprüche 1 oder 2, **dadurch gekennzeichnet, dass** jeder integrierte Schaltkreis ein ASIC (100) ist.

4. Lichtschrankenanordnung (1) nach einem der Ansprüche 1 bis 3, **dadurch gekennzeichnet, dass** diese mehrere Sender (21 - 24) und mehrere Empfänger (41 - 44) aufweist, wobei jedem Sender (21 - 24) ein Empfänger (41 - 44) zugeordnet ist und mit diesem ein Sender-Empfänger-Paar bildet.

5. Lichtschrankenanordnung (1) nach Anspruch 4, **dadurch gekennzeichnet, dass** alle Sender (21 - 24) in einem ersten Gehäuse und alle Empfänger (41 - 44) in einem zweiten Gehäuse angeordnet sind.

6. Lichtschrankenanordnung (1) nach Anspruch 4, **dadurch gekennzeichnet, dass** zwei Gehäuse vorgesehen sind, wobei in jedem Gehäuse eine alternierende Anordnung von Sendern (21 - 24) und Empfängern (41 - 44) vorgesehen ist.

7. Lichtschrankenanordnung (1) nach Anspruch 6, **dadurch gekennzeichnet, dass** Ergebnisse einer Schutzfeldauswertung über die Lichtstrahlen (31 - 34) eines ausgewählten Senders (21 - 24) zum zugeordneten Empfänger (41 - 44) übertragen werden.

8. Lichtschrankenanordnung (1) nach einem der Ansprüche 1 bis 7, **dadurch gekennzeichnet, dass** jeder integrierte Schaltkreis eine Adressierschaltung (110) aufweist.

9. Lichtschrankenanordnung (1) nach Anspruch 8, **dadurch gekennzeichnet, dass** die Adressierschaltung (110) eine Anordnung von Schieberegistern oder Flipflops aufweist.

10. Lichtschrankenanordnung (1) nach einem der Ansprüche 8 oder 9, **dadurch gekennzeichnet, dass** eine Adressierung durch ein Token aktivierbar ist.

11. Lichtschrankenanordnung (1) nach Anspruch 10, **dadurch gekennzeichnet, dass** ein Token in einen integrierten Schaltkreis eingebbar und von diesem an den nächsten integrierten Schaltkreis ausgebbar ist.

12. Lichtschrankenanordnung (1) nach Anspruch 10 oder 11, **dadurch gekennzeichnet, dass** mit einem Token unterschiedliche Adressierphasen innerhalb eines integrierten Schaltkreises aktivierbar sind.

13. Lichtschrankenanordnung (1) nach einem der Ansprüche 1 bis 12, **dadurch gekennzeichnet, dass** jeder integrierte Schaltkreis eine Speicherlogik (128) für ein Anzeigeelement (510) aufweist.

14. Lichtschrankenanordnung (1) nach einem der Ansprüche 1 bis 13, **dadurch gekennzeichnet, dass** den Sendern (21 - 24) und Empfängern (41 - 44) gleichartige Optiken zugeordnet sind.

15. Lichtschrankenanordnung (1) nach einem der Ansprüche 1 bis 14, **dadurch gekennzeichnet, dass** Funktionalitäten der integrierten Schaltkreise mittels einer Steuerung vorgebbar sind.

16. Lichtschrankenanordnung (1) nach Anspruch 15, **dadurch gekennzeichnet, dass** das Token in der Steuerung generiert wird.

17. Lichtschrankenanordnung (1) nach einem der Ansprüche 15 oder 16, **dadurch gekennzeichnet, dass** Bussignale (121, 104, 105, 108) von der Steuerung in einen integrierten Schaltkreis eingebbar sind.

18. Lichtschrankenanordnung (1) nach einem der Ansprüche 1 bis 17, **dadurch gekennzeichnet, dass** in jedem integrierten Schaltkreis Testmittel zur Durchführung von Selbsttests vorgesehen sind.

19. Lichtschrankenanordnung (1) nach Anspruch 18, **dadurch gekennzeichnet, dass** in jedem integrierten Schaltkreis die Verstärker (130) zur Verstärkung von Empfangssignalen und/oder die Verstärker (130) zur Ansteuerung von Sendern (21 -24) testbar sind.

20. Lichtschrankenanordnung (1) nach einem der Ansprüche 18 oder 19, **dadurch gekennzeichnet, dass** in jedem integrierten Schaltkreis die Adressierschaltung (110) testbar ist.

21. Lichtschrankenanordnung (1) nach einem der Ansprüche 18 bis 20, **dadurch gekennzeichnet, dass** Testsignale und/oder Testphasen in einem integrierten Schaltkreis selbst generiert werden oder über Busleitungen (104, 105, 108) eingelesen werden und oder Testergebnissignale über Busleitungen (106) ausgegeben werden.

22. Lichtschrankenanordnung (1) nach Anspruch 21, **dadurch gekennzeichnet, dass** Testsignale und/oder Testphasen aus einem Token und/oder aus über Busleitungen (104, 105, 108) eingelesenen Clocksignalen abgeleitet werden.

23. Lichtschrankenanordnung (1) nach einem der Ansprüche 18 bis 22, **dadurch gekennzeichnet, dass** die Testmittel Zeitsteuermittel zur Durchführung von Selbsttests aufweisen.

24. Lichtschrankenanordnung (1) nach einem der Ansprüche 18 bis 23, **dadurch gekennzeichnet, dass** die Testmittel Speichermittel zur Speicherung von Soll-Testergebnissen aufweisen, wobei bei Durchführung von Tests erhaltene Testergebnisse mit den Soll-Testergebnissen verglichen werden.

25. Verfahren zum Betrieb einer Lichtschrankenanordnung (1) mit einer Anordnung von Lichtstrahlen (31 - 34) emittierenden Sendern (21 - 24) und Lichtstrahlen (31 - 34) empfangenden Empfängern (41 - 44), wobei mit der ein Schutzfeld überwacht wird, wobei abhängig davon ob innerhalb des Schutzfelds ein Objekt registriert wird oder nicht ein Objektfeststellungssignal generiert wird, **dadurch gekennzeichnet, dass** jedem Sender (21 - 24) und jedem Empfänger (41 - 44) als Ansteuermittel ein integrierter Schaltkreis zugeordnet ist, wobei die integrierte Schaltkreise identisch ausgebildet sind und sowohl Senderfunktionen als auch Empfängerfunktionen enthalten, wobei jeder integrierte Schaltkreis einen Verstärker (130) zur Verstärkung von Empfangssignalen eines Empfängers (41 - 44) und einen Treiber (120) zur Ansteuerung eines Senders (21 - 24) aufweist und wobei durch eine externe Beschaltung und/oder Programmierung ein integrierter Schaltkreis wahlweise als Ansteuermittel für einen Sender (21 - 24) oder einen Empfänger (41 - 44) einsetzbar ist.

## Claims

1. A light barrier assembly (1) with an arrangement of transmitters (21 - 24) emitting light beams (31 - 34) and receivers (41 - 44) receiving light beams (31 - 34), with which a protective field is monitored, an object detection signal being generated depending on whether or not an object is registered within the protective field, an integrated circuit being assigned to each transmitter (21 - 24) and each receiver (41 - 44) as drive means, wherein the integrated circuits are identically designed and contain both transmitter functions and receiver functions, wherein each integrated circuit has an amplifier (130) for amplifying received signals of a receiver (41 - 44) and wherein an integrated circuit can be used selectively as control means for a transmitter (21 - 24) or a receiver (41 - 44) by means of an external circuit and/or programming, **characterised in that** each integrated circuit also has a driver (120) for controlling a transmitter (21, 24).

2. A light barrier assembly (1) according to claim 1, **characterised in that** this is a safety sensor, whereby a safety function is triggered depending on the object detection signal.

3. A light barrier assembly (1) according to one of claims 1 or 2, **characterised in that** each integrated circuit is an ASIC (100).

4. A light barrier assembly (1) according to one of claims 1 to 3, **characterised in that** it has a plurality of transmitters (21 - 24) and a plurality of receivers (41 - 44), wherein a receiver (41 - 44) is assigned to each transmitter (21 - 24) and forms a transmitter-receiver pair with the latter.

5. A light barrier assembly (1) according to claim 4, **characterised in that** all transmitters (21 - 24) are arranged in a first housing and all receivers (41 - 44) are arranged in a second housing.

6. A light barrier assembly (1) according to claim 4, **characterised in that** two housings are provided, an alternating arrangement of transmitters (21 - 24) and receivers (41 - 44) being provided in each housing.

7. A light barrier assembly (1) according to claim 6, **characterised in that** results of a protective field evaluation are transmitted via the light beams (31 - 34) of a selected transmitter (21 - 24) to the associated receiver (41 - 44).

8. A light barrier assembly (1) according to one of claims 1 to 7, **characterised in that** each integrated circuit comprises an addressing circuit (110).

9. A light barrier assembly (1) according to claim 8, **characterised in that** the addressing circuit (110) has an arrangement of shift registers or flip-flops.

10. A light barrier assembly (1) according to one of claims 8 or 9, **characterised in that** addressing can be activated by a token.

11. A light barrier assembly (1) according to claim 10, **characterised in that** a token can be input into an integrated circuit and can be output from this to the next integrated circuit.

12. A light barrier assembly (1) according to claim 10 or 11, **characterised in that** different addressing phases can be activated with a token within an integrated circuit.

13. A A light barrier assembly (1) according to any one of claims 1 to 12, **characterised in that** each integrated circuit comprises a memory logic (128) for a display element (510).

14. A light barrier assembly (1) according to one of claims 1 to 13, **characterised in that** similar optics are assigned to the transmitters (21 - 24) and receivers (41 - 44).

15. A light barrier assembly (1) according to one of claims 1 to 14, **characterised in that** functionalities of the integrated circuits can be preset by means of a controller.

16. A light barrier assembly (1) according to claim 15, **characterised in that** the token is generated in the controller.

17. A light barrier assembly (1) according to one of claims 15 or 16, **characterised in that** bus signals (121, 104, 105, 108) can be input from the controller into an integrated circuit.

18. A light barrier assembly (1) according to one of claims 1 to 17, **characterised in that** test means for carrying out self-tests are provided in each integrated circuit.

19. A light barrier assembly (1) according to claim 18, **characterised in that** the amplifiers (130) for amplifying received signals and/or the amplifiers (130) for driving transmitters (21 -24) can be tested in each integrated circuit.

20. A light barrier assembly (1) according to one of claims 18 or 19, **characterised in that** the addressing circuit (110) can be tested in each integrated circuit.

21. A light barrier assembly (1) according to one of claims 18 to 20, **characterised in that** test signals and/or test phases are generated in an integrated circuit itself or are read in via bus lines (104, 105, 108) and or test result signals are output via bus lines (106).

22. A light barrier assembly (1) according to claim 21, **characterised in that** test signals and/or test phases are derived from a token and/or from clock signals read in via bus lines (104, 105, 108).

23. A light barrier assembly (1) according to one of claims 18 to 22, **characterised in that** the test means comprise timing means for performing self-tests.

24. A light barrier assembly (1) according to any one of claims 18 to 23, **characterised in that** the test means comprise memory means for storing target test results, wherein test results obtained when performing tests are compared with the target test results.

25. A method for operating a light barrier assembly (1) with an arrangement of transmitters (21 - 24) emitting light beams (31 - 34) and receivers (41 - 44) receiving light beams (31 - 34), with which a protective field is monitored, an object detection signal being generated depending on whether or not an object is registered within the protective field, **characterised in that** an integrated circuit is assigned to each transmitter (21 - 24) and each receiver (41 - 44) as control means, wherein the integrated circuits are identically designed and contain both transmitter functions and receiver functions, wherein each integrated circuit has an amplifier (130) for amplifying received signals of a receiver (41 - 44) and a driver (120) for activating a transmitter (21 - 24) and wherein an integrated circuit can be used optionally as activating means for a transmitter (21 - 24) or a receiver (41 - 44) by means of an external circuit and/or programming.

## Revendications

1. Agencement de barrière lumineuse (1) avec un agencement d'émetteurs (21 - 24) émettant des faisceaux lumineux (31 - 34) et de récepteurs (41 - 44) recevant des faisceaux lumineux (31 - 34), avec lesquels un champ de protection est surveillé, un signal de détection d'objet étant généré selon qu'un objet est enregistré ou non dans le champ de protection, un circuit intégré étant affecté à chaque émetteur (21 - 24) et à chaque récepteur (41 - 44) en tant que moyen d'entraînement, dans lequel les circuits intégrés sont conçus de manière identique et contiennent des fonctions d'émetteur et de récepteur, dans lequel chaque circuit intégré possède un amplificateur (130) pour amplifier les signaux reçus d'un récepteur (41 - 44) et dans lequel un circuit intégré peut être utilisé sélectivement comme moyen de commande pour un émetteur (21 - 24) ou un récepteur (41 - 44) au moyen d'un circuit externe et/ou d'une programmation, **caractérisé par le fait que** chaque circuit intégré possède également un pilote (120) pour la commande d'un émetteur (21, 24).

2. Agencement de barrière lumineuse (1) selon la revendication 1, **caractérisé par le fait qu'**il s'agit d'un capteur de sécurité, une fonction de sécurité étant déclenchée en fonction du signal de détection de l'objet.

3. Agencement de barrière lumineuse (1) selon l'une des revendications 1 ou 2, **caractérisé par le fait que** chaque circuit intégré est un ASIC (100).

4. Agencement de barrière lumineuse (1) selon l'une des revendications 1 à 3, **caractérisé en ce qu'**il comporte plusieurs émetteurs (21 - 24) et plusieurs récepteurs (41 - 44), un récepteur (41 - 44) étant affecté à chaque émetteur (21 - 24) et formant avec lui une paire émetteur-récepteur.

5. Agencement de barrière lumineuse (1) selon la revendication 4, **caractérisé par le fait que** tous les émetteurs (21 - 24) sont disposés dans un premier boîtier et que tous les récepteurs (41 - 44) sont disposés dans un second boîtier.

6. Agencement de barrière lumineuse (1) selon la revendication 4, **caractérisé en ce que** deux boîtiers sont prévus, une disposition alternée d'émetteurs (21 - 24) et de récepteurs (41 - 44) étant prévue dans chaque boîtier.

7. Agencement de barrière lumineuse (1) selon la revendication 6, **caractérisé par le fait que** les résultats d'une évaluation du champ de protection sont transmis par les faisceaux lumineux (31 - 34) d'un émetteur sélectionné (21 - 24) au récepteur associé (41 - 44).

8. Agencement de barrière lumineuse (1) selon l'une des revendications 1 à 7, **caractérisé par le fait que** chaque circuit intégré comprend un circuit d'adressage (110).

9. Agencement de barrière lumineuse (1) selon la revendication 8, **caractérisé par le fait que** le circuit d'adressage (110) est constitué de registres à décalage ou de bascules.

10. Agencement de barrière lumineuse (1) selon l'une des revendications 8 ou 9, **caractérisé par le fait que** l'adressage peut être activé par un jeton.

11. Agencement de barrière lumineuse (1) selon la revendication 10, **caractérisé par le fait qu'**un jeton peut être introduit dans un circuit intégré et peut être transmis de celui-ci au circuit intégré suivant.

12. Agencement de barrière lumineuse (1) selon la revendication 10 ou 11, **caractérisé par le fait que** différentes phases d'adressage peuvent être activées à l'aide d'un jeton dans un circuit intégré.

13. Agencement de barrière lumineuse (1) selon l'une quelconque des revendications 1 à 12, **caractérisé en ce que** chaque circuit intégré comprend une logique de mémoire (128) pour un élément d'affichage (510).

14. Agencement de barrière lumineuse (1) selon l'une des revendications 1 à 13, **caractérisé par le fait que** les émetteurs (21 - 24) et les récepteurs (41 - 44) sont dotés d'optiques similaires.

15. Agencement de barrière lumineuse (1) selon l'une des revendications 1 à 14, **caractérisé par le fait que** les fonctionnalités des circuits intégrés peuvent être préréglées au moyen d'un dispositif de commande.

16. Agencement de barrière lumineuse (1) selon la revendication 15, **caractérisé par le fait que** le jeton est généré dans le dispositif de commande.

17. Agencement de barrière lumineuse (1) selon l'une des revendications 15 ou 16, **caractérisé par le fait que** les signaux de bus (121, 104, 105, 108) peuvent être introduits par le dispositif de commande dans un circuit intégré.

18. Agencement de barrière lumineuse (1) selon l'une des revendications 1 à 17, **caractérisé par le fait que** des moyens de test pour effectuer des autotests sont prévus dans chaque circuit intégré.

19. Agencement de barrière lumineuse (1) selon la revendication 18, **caractérisé par le fait que** les amplificateurs (130) pour l'amplification des signaux reçus et/ou les amplificateurs (130) pour le pilotage des émetteurs (21 -24) peuvent être testés dans chaque circuit intégré.

20. Agencement de barrière lumineuse (1) selon l'une des revendications 18 ou 19, **caractérisé par le fait que** le circuit d'adressage (110) peut être testé dans chaque circuit intégré.

21. Agencement de barrière lumineuse (1) selon l'une des revendications 18 à 20, **caractérisé par le fait que** les signaux d'essai et/ou les phases d'essai sont générés dans un circuit intégré lui-même ou sont lus par des lignes de bus (104, 105, 108) et que les signaux de résultat d'essai sont émis par des lignes de bus (106).

22. Agencement de barrière lumineuse (1) selon la revendication 21, **caractérisé par le fait que** les signaux d'essai et/ou les phases d'essai sont dérivés d'un jeton et/ou de signaux d'horloge lus via les lignes de bus (104, 105, 108).

23. Agencement de barrière lumineuse (1) selon l'une des revendications 18 à 22, **caractérisé par le fait que** les moyens d'essai comprennent des moyens de temporisation pour effectuer des autotests.

24. Agencement de barrière lumineuse (1) selon l'une des revendications 18 à 23, **caractérisé par le fait que** les moyens de test comprennent des moyens de mémoire pour stocker des résultats de test cibles, dans lesquels les résultats de test obtenus lors de l'exécution des tests sont comparés aux résultats de test cibles.

25. Procédé de fonctionnement d'un agencement de barrière lumineuse (1) avec un agencement d'émetteurs (21 - 24) émettant des faisceaux lumineux (31 - 34) et de récepteurs (41 - 44) recevant des faisceaux lumineux (31 - 34), avec lequel un champ de protection est surveillé, un signal de détection d'objet étant généré selon qu'un objet est enregistré ou non dans le champ de protection, **caractérisé en ce qu'**un circuit intégré est affecté à chaque émetteur (21 - 24) et à chaque récepteur (41 - 44) en tant que moyen de commande, dans lequel les circuits intégrés sont conçus de manière identique et contiennent des fonctions d'émetteur et de récepteur, dans lequel chaque circuit intégré possède un amplificateur (130) pour amplifier les signaux reçus d'un récepteur (41 - 44) et un pilote (120) pour activer un émetteur (21 - 24) et dans lequel un circuit intégré peut être utilisé au choix comme moyen d'activation pour un émetteur (21 - 24) ou un récepteur (41 - 44) par le biais d'un circuit externe et/ou d'une programmation.
